Europäisches Patentamt

European Patent Office

Office européen des brevets

(19)

(11) Veröffentlichungsnummer: **0 286 715**
**B1**

(12) **EUROPÄISCHE PATENTSCHRIFT**

(45) Veröffentlichungstag der Patentschrift:
**17.10.90**

(51) Int. Cl.⁵: **F16L 15/00**

(21) Anmeldenummer: **87112671.0**

(22) Anmeldetag: **31.08.87**

(54) Einschraubverschraubung.

(30) Priorität: **11.04.87 DE 8705420 U**

(43) Veröffentlichungstag der Anmeldung:
**19.10.88 Patentblatt 88/42**

(45) Bekanntmachung des Hinweises auf die Patenterteilung:
**17.10.90 Patentblatt 90/42**

(84) Benannte Vertragsstaaten:
**AT BE CH DE ES FR GB GR IT LI LU NL SE**

(56) Entgegenhaltungen:
**EP-A- 177 116**
**DE-A- 2 717 739**
**DE-B- 1 650 260**
**DE-U- 8 705 420**
**US-A- 4 586 732**

(73) Patentinhaber: **EM-Technik GmbH, Armaturenbau
Industriestrasse 2, D-6701 Maxdorf(DE)**

(72) Erfinder: **Meier, Norbert, Im Horst 4, D-6701 Maxdorf(DE)**

(74) Vertreter: **Patentanwälte Zellentin & Partner,
Rubensstrasse 30, D-6700 Ludwigshafen(DE)**

## Beschreibung

Die vorliegende Erfindung betrifft Einschraubverschraubungen in Ventile, Hähne oder Gas- oder Flüssigkeitsführende Geräte, wie z.B. für Analysezwecke.

Bei herkömmlichen Einschraubverschraubungen besteht ein besonderes Problem in dem konstruktiv bedingten Totvolumen zwischen der Gerätewandung und der mit Hilfe der Verschraubung herzustellenden Anschlüsse. Da diese leckfrei, d.h. gas- oder flüssigkeitsdicht zu sein haben, werden grundsätzlich zwei Konstruktionsprinzipien angewendet. Einmal wird die Dichtigkeit bei einer zylindrischen Einschraubverschraubung mit Hilfe eines zwischen Betätigungsansatz (Sechskant) und Gehäusewandung eingelegten Dichtbundes erzielt (DIN 3852). Die andere Lösung besteht in der Verwendung einer konischen Ausführung von Außen- und Innengewinde, wobei die Dichtigkeit direkt im Gewinde erzielt wird, wenn das konische Gewindeprofil des Außengewindes den örtlichen Durchmesser des Innengewindes übersteigt, was bei Verwendung insbesondere von Kunststoffgehäusen und -verschraubungen ohne weiteres möglich ist.

In beiden Fällen verbleibt jedoch zwischen der Bohrung und der Kopfplatte, d.h. dem Ende der Verschraubung ein durch Lägendifferenz bedingter Totraum. Dieser Totraum kann bei Analysen oder auch im biotechnischen Bereich außerordentlich störend sein, da hier Restgase oder -flüssigkeiten verbleiben können, die nur mühsam auszuspülen sind, oder aber es kann zu Auskristallisationen kommen, die nachfolgende Qualitäten kontaminieren.

Aus der EP-A 177 116 ist eine Schraubverbindung für flüssigkeitsführende Leitungen bekannt, bei der auf einen Konus eines Vaterteils einer Verschraubung ein konischer Ring aufgelegt wird, der sich über einen Knick in den achsparallelen Bereich erstreckt und der endseitig einen an diesen angeklebten elastomeren Ring aufweist. Konus und Ring werden beim Verschrauben vom Vaterteil mit der Leitung zwischen die Schrägflächen des jeweiligen Konus gepreßt. Damit soll die Aufgabe gelöst werden, bei konischen Oberflächen aufweisenden Paßstücken Undichtigkeiten zu vermeiden. Abgesehen davon, daß eine derartige Lösung auf relativ großvolumige Verschraubungen beschränkt sind, lassen sich auch hier Totvolumina zwischen dem Konus des Vaterteils und konischen Ring nicht vermeiden.

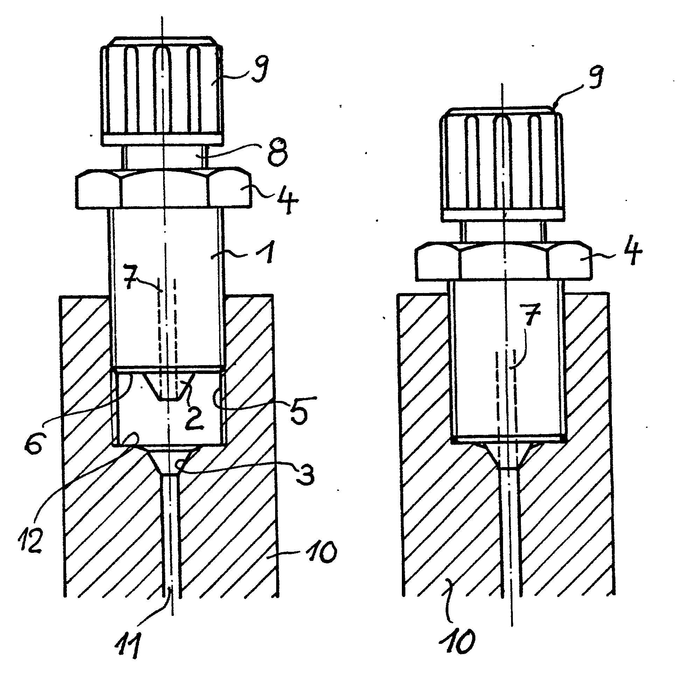

In der DE-A 2 717 739 ist ein entfernbares, zu verriegelndes Verbindungselement für Schlauchverbindungen gezeigt, bei welchem an einem Verteiler Außengewindestücke (Vaterteile) angeordnet sind, die mittige konische Fortsätze aufweisen. Auf das Außengewindestück ist eine Mutter aufgeschraubt, die in ihrem unteren Bereich (Fig. 2) ein weiteres Gewinde mit größerer Steigung aufweist, das vom Konus durchgriffen wird. In dieses Gewinde ist ein den Schlauchanschluß tragendes Mutterteil einschraubbar.

Diese Lösung hat den Nachteil, daß der am Mutterteil befestigte Schlauch bei der Montage des Mutterteils verdreht werden muß. Wesentlicher Nachteil ist aber auch hier, daß ein totvolumenfreier Übergang zwischen den Anschlußstücken nicht erreicht werden kann, was u.a. auch daran liegt, daß die Teile beim Einschrauben jeweils gegen die Mutter anschlagen.

Im biotechnischen Bereich besteht die Gefahr von Ansiedlung von Bakterien, die auch bei Sterilisation mit Heißdampf nicht erreicht werden können. Man hat daher vorgeschlagen, den Freiraum zwischen Verschraubung und Gehäuse durch O-Ringe auszufüllen, die entweder in das Innengewinde eingelegt oder auch auf einen Zapfen am Einschraubgewinde aufgeschoben sind.

Die dabei verwendbaren Materialien für die Dichtungsmassen sind jedoch insofern problematisch, als diese wegen der erforderlichen Elastizität lösliche Substanzen, wie z. B. Weichmacher, enthalten müssen und vielfach nicht gegen die Durchflußmedien resistent sind.

Die vorliegende Erfindung hat sich daher die Aufgabe gestellt eine Einschraubverschraubung zu schaffen, bei der die vorgenannten Nachteile nicht auftreten, die frei sind von Totvolumina und aus einheitlichen und damit resistenten Materialien hergestellt werden können.

Die Lösung dieser Aufgabe gelingt bei einer Einschraubverschraubung gemäß dem Oberbegriff des Anspruchs 1 durch die im kennzeichnenden Teil des Anspruchs 1 aufgeführten Merkmale.

Die Gerätschaft, in die diese Einschraubverschraubung eingebaut wird, weist somit ebenfalls ein nicht-dichtendes zylindrisches Gewinde auf und besitzt am Ausgang des anzuschließenden Kanals eine entsprechend gegensinnig geformte konische Bohrung.

Bohrung und Dichtkegelansatz sind so aufeinander abgestimmt, daß letzterer die Bohrung dichtend ausfüllt und derart einen totvolumenfreien Anschluß bildet. Der Querschnitt der Basis des Dichtkegelansatzes kann mit dem Querschnitt des Außengewindes insbesondere bei kleinen Querschnitten übereinstimmen, vorzugsweise ist er jedoch kleiner zu wählen. Der Winkel des Konus ist auf das verwendete Material abgestimmt.

Die Einschraubverschraubung besteht vorteilhafterweise aus Kunststoff, da dieses Material besonders elastisch und in der Lage ist, Fertigungstoleranzen auszugleichen.

Der Betätigungsansatz besteht in an sich bekannter Weise aus einem Seckskant geeigneter Schlüsselweite und die Länge des zylindrischen Außengewindestückes ist mindestens gleich groß, wie das Sackloch, vorzugsweise jedoch länger als dieses ausgebildet.

Die Kopfplatte des Einsatzes, auf dem sich der Dichtkegel befindet, überragt diesen und bildet so einen Anschlag als Überdrehsicherung gegen den Sacklochgrund, in dem sich der Gegenkonus befindet.

Anhand der beiliegenden Figur wird die vorliegende Erfindung beispielhaft näher erläutert.

Die Darstellung zeigt die Einschraubverschraubung links in halbeingeschraubtem und rechts in fertig montiertem Zustand.

Die Verschraubung besteht aus einem zylindrischen Außengewindestück 1 mit einem zentralen Kanal 7. Das Außengewindestück endet in einer Kopfplatte 6, an die mittig ein Dichtkegelansatz 2 angeformt ist. Nach oben hin stößt das Außengewindestück 1 an den Betätigungsansatz, hier der Sechskant 4, an den wiederum ein üblicher Schlauchverbinder 8 mit Schraubkappe 9, z. B. nach DE-GM 80 31 377, angeformt ist.

Die Einschraubverschraubung befindet sich in einem Sackloch mit Innengewinde 5, das zu einer Gas- oder flüssigkeitsführenden Vorrichtung 10 gehört.

Im montiertem Zustand ruht der Dichtkegelansatz 2 im Gegenkonus 3 und verbindet so totvolumenfrei die zentrale Bohrung 11 der Vorrichtung 10 mit dem Kanal 7 des zugehörigen Schlauchverbinders der Einschraubverschraubung. Die Kopfplatte 6 der Verschraubung liegt bei entsprechender Bemessung des Dichtkegelansatzes 2 auf dem Boden 12 des Sackloches auf und bildet derart eine Überdrehsicherung.

## Patentansprüche

1. Einschraubverschraubung aus Kunststoff als Anschluß für für Ventile, Hähne oder dergleichen mit Schläuchen an Flüssigkeiten oder Gase führende Vorrichtungen, bestehend aus einem zylindrischen Außengewindestück mit einem innenliegenden Kanal, einem Betätigungsansatz und einem Schlauchanschluß sowie einem entsprechenden Innengewinde in der Flüssigkeit oder Gase führenden Vorrichtung, dadurch gekennzeichnet, daß das Außengewindestück (1) in einer Kopfplatte (6) endet, an dem koaxial mit dem Außengewindestück mittig ein Dichtkegelansatz (2) angeformt ist und die Flüssigkeiten oder Gase führende Vorrichtung (10) in einem Sackloch einen entsprechenden Gegenkonus (3) aufweist, dessen Boden (12) einen Anschlag für die Kopfplatte (6) bildet.

2. Einschraubverschraubung nach Anspruch 1, dadurch gekennzeichnet, daß die Länge des Dichtkegelansatzes (2) und dessen Konizität an die Abmessung eines entsprechenden Gegenkonus (3) als Leitungsende einer Gas- oder flüssigkeitsführenden Vorrichtung derart angepaßt ist, daß der Dichtkegelansatz (2) in montiertem Zustand die konische Bohrung (3) ausfüllt.

3. Einschraubverschraubung nach Anspruch 1 oder 2, dadurch gekennzeichnet, daß sie aus einem thermoplastischen Kunststoff gefertigt ist.

4. Einschraubverschraubung nach mindestens einem der Ansprüche 1–3, dadurch gekennzeichnet, daß der Betätigungsansatz ein Sechskant (4) ist und daß die Länge des zylindrischen Außengewindestückes (1) größer ist als die Länge des Innengewindes (5) der gas- oder flüssigkeitsführenden Vorrichtung.

## Claims

1. Screw-in threaded joint of synthetic material as connection for valves, taps or the like with pipes on liquid- and gas-conveying devices, consisting of a cylindrical outer threaded piece with an inner-lying canal, an operational collar and a pipe connection, as well as an appropriate inner thread in the liquid- or gas-conveying device, characterised in that the outer threaded piece (1) ends in an end plate (6) on which is formed, coaxial with the outer threaded piece, a central sealing cone projection (2) and the liquid- or gas-conveying device (10) has, in a blind-end bore, a corresponding countercone (3), the bottom (12) of which forms a stop for the end plate (6).

2. Screw-in threaded joint according to claim 1, characterised in that the length of the sealing cone projection (2) and the conicality thereof is adapted to the dimensions of a corresponding countercone (3) as pipe end of a gas- or liquid-conveying device in such a manner that the sealing cone projection (2), in assembled state, fills the conical bore (3).

3. Screw-in threaded joint according to claim 1 or 2, characterised in that it is made from a thermoplastic synthetic material.

4. Screw-in threaded joint according to at least one of claims 1–3, characterised in that the operational collar is a hexagon (4) and that the length of the cylindrical outer threaded piece (1) is greater than the length of the inner thread (5) of the gas- or liquid-conveying device.

## Revendications

1. Raccord à vis en matière synthétique, en tant que raccordement de vannes, de robinets etc. à des dispositifs de conduite de liquides ou de gaz par des tuyaux flexibles, constitué par une partie cylindrique à filet externe comportant un canal interne, une embase de manœuvre et un raccordement de tuyau, ainsi que par un filet interne correspondant dans le dispositif de conduite de liquide ou de gaz, caractérisé en ce que la partie à filet externe (1) se termine par une semelle de recouvrement (6) sur laquelle est formé, coaxialement à la partie à filet externe et au milieu, un tronc de cône d'étanchéité (2) et en ce que le dispositif (10) de conduite de liquides ou de gaz présente un cône réciproque (3) correspondant dans un trou borgne dont le fond (12) forme une butée pour la semelle de recouvrement (6).

2. Raccord à vis suivant la revendication 1, caractérisé en ce que la longueur du tronc de cône d'étanchéité (2) et sa conicité sont adaptées à la dimension d'un cône réciproque (3) correspondant, réalisé en tant qu'extrémité de conduite d'un dispositif de conduite de gaz ou de liquide, de sorte que le tronc de cône d'étanchéité (2) remplit, à l'état monté, l'alésage conique (3).

3. Raccord à vis suivant l'une ou l'autre des revendications 1 et 2, caractérisé en ce qu'il est réalisé en une matière synthétique thermoplastique.

4. Raccord à vis suivant l'une quiconque des revendications 1 à 3, caractérisé en ce que l'embase de manœuvre est constituée par un élément hexagonal (4) et en ce que la longueur de la partie cylindrique à filet externe (1) est supérieure à la longueur du filet interne (5) du dispositif de conduite de gaz ou de liquide.